(19) Europäisches Patentamt

European Patent Office

Office européen des brevets

(11) **EP 1 840 751 B1**

(12) **FASCICULE DE BREVET EUROPEEN**

(45) Date de publication et mention
de la délivrance du brevet:
**17.12.2008   Bulletin 2008/51**

(51) Int Cl.:
***G06F 13/28*** *(2006.01)*

(21) Numéro de dépôt: **07290370.1**

(22) Date de dépôt: **28.03.2007**

(54) **Traitement de données avec transfert de données entre mémoires**

Datenverarbeitung mit Datenübertragung zwischen Speichern

Data processing with data transfer between memories

(84) Etats contractants désignés:
**DE FR GB IT**

(30) Priorité: **28.03.2006   FR 0602695**

(43) Date de publication de la demande:
**03.10.2007   Bulletin 2007/40**

(73) Titulaire: **STMicroelectronics SA**
**92120 Montrouge (FR)**

(72) Inventeurs:
• **Couvert, Patrice**
**38160 Saint-Marcelin (FR)**
• **Cauchy, Xavier**
**38190 Laval (FR)**
• **Philippe, Anthony**
**38000 Grenoble (FR)**
• **Ferroussat, Sébastien**
**01500 Amberieu en Bugey (FR)**

(74) Mandataire: **Verdure, Stéphane**
**Cabinet Plasseraud**
**52 rue de la Victoire**
**75440 Paris Cedex 09 (FR)**

(56) Documents cités:
**EP-A- 1 058 193          EP-A1- 1 355 487**
**WO-A-00/04443            JP-A- 2000 305 891**
**US-A1- 2002 162 119**

EP 1 840 751 B1

**Description**

La présente invention concerne le traitement de données comprenant un transfert de données entre mémoires, et plus précisément un transfert de données réalisé par l'intermédiaire d'un dispositif de type DMA ("Direct Access Memory").

Dans certaines applications, comme par exemple dans le domaine de la vidéo, une mémoire de stockage de masse, ci-après mémoire externe, stocke des données qui sont destinées à être traitées par un processeur selon un algorithme déterminé. Classiquement, le processeur dispose d'une mémoire de traitement, ci-après mémoire interne, qui lui est directement associée et à partir de laquelle il récupère les données à traiter. Ainsi, les données sont en premier lieu transférées depuis la mémoire externe vers la mémoire interne avant d'être soumises au traitement effectué par le processeur.

Afin de réaliser le transfert de données, entre mémoire externe et mémoire interne, il est classique d'utiliser un dispositif de type DMA. Un dispositif DMA permet de réaliser des transferts directs de données entre une mémoire externe et une mémoire interne associée à un processeur, sans recourir à l'intervention du microprocesseur, sauf exception notamment pour initier et conclure le transfert des données. Ainsi, le dispositif DMA permet d'alléger la charge du processeur puisque le transfert de données peut alors être réalisé quasiment sans intervention du processeur. Lors de ce type de transfert de données, les données qui sont stockées selon un format de données déterminé dans la mémoire externe se trouvent être stockées selon le même format dans la mémoire interne.

Mais, dans certaines circonstances, le format de stockage des données dans la mémoire externe diffère du format des données qui est adapté à l'algorithme de traitement qui doit être appliqué à ces données par le processeur. Le format requis par l'algorithme de traitement de données peut correspondre, soit à une caractéristique imposée par l'algorithme de traitement de données vidéo, soit à une caractéristique qui permet d'augmenter les performances de traitement des données vidéo par l'algorithme utilisé.

Dans ces circonstances, le processeur est alors sollicité pour récupérer les données dans sa mémoire interne et pour les agencer selon le format qui est adapté pour l'application de l'algorithme de traitement. Il en résulte une augmentation de la charge du processeur.

Dans le domaine du traitement des données vidéo, on doit prendre en compte, d'une part plusieurs formats de stockage qui sont classiquement utilisés et, d'autre part, différents algorithmes de traitement de ces données qui nécessitent respectivement des formats de données différents. Par conséquent, dans un tel contexte, il arrive que le format de stockage des données et le format requis par l'algorithme de traitement à appliquer à ces données stockées ne correspondent pas l'un à l'autre. Il en résulte que le processeur a en charge de gérer cette différence de format, ce qui accroît sa charge de travail.

Les images vidéo sont classiquement codées en utilisant des informations de chrominance et des informations de luminance combinées. Pour convertir un signal vidéo en des données de luminance et en des données de chrominance, le signal est échantillonné. Puis, des données de chrominance et/ou de luminance sont associées à tout ou partie des échantillons en fonction du codage de l'image utilisé.

Différents codage sont classiquement utilisés. Ainsi, par exemple, les termes '4:2:2' et '4:2:0' désignent des codages différents qui sont classiquement utilisés, chacun décrivant une structure d'une image numérique différente. Les termes 4:2:2 signifient que la chrominance est sous-échantillonnée horizontalement par un facteur de deux relativement à la luminance. Les termes 4:2:0 signifie que la chrominance est sous-échantillonnée horizontalement et verticalement par un facteur de deux relativement à la luminance. Ainsi, les données stockées varient non seulement en fonction du codage de l'image vidéo, qui fournit plus ou moins de données de luminance et de données de chrominance pour une image vidéo, mais aussi en fonction du format de stockage des données codées, puisqu'en effet, les données de chrominance et de luminance peuvent être stockées alternativement et successivement dans l'ordre des pixels d'une image ou encore de manière séparée, les données de chrominance d'un côté et les données de luminance d'un autre côté.

Le document EP 1355487 décrit un dispositif de transfert de données pour transférer des données d'image à partir d'un dispositif de traitement d'image à un dispositif électronique, ledit dispositif comprenant: une unité de conversion pour effectuer une transformation prédéterminée sur l'entrée de données d'image de ledit dispositif de traitement d'image; une mémoire graphique pour stocker temporairement les données d'image; un circuit de commande graphique pour écrire les données d'image en ladite mémoire graphique ou lisant les données d'image stockées dans ladite mémoire graphique et les transmettant à ledit dispositif électronique; et une unité centrale de traitement pour choisir un premier itinéraire de transmission de données pour transmettre les données d'image à partir de ladite unité de conversion en ledit circuit de commande graphique ou un deuxième itinéraire de transmission de données pour transmettre un signal de commande à ledit circuit de commande graphique; ladite unité de conversion étant adaptée pour convertir le train des données d'image de ledit dispositif de traitement d'image en format de rendement.

La présente invention vise à réduire la charge du processeur au cours de l'étape de lecture et d'écriture des données dans sa mémoire interne pour l'application de l'algorithme de traitement des données.

Un premier aspect de la présente invention propose un procédé de traitement de données stockées dans une première mémoire par un dispositif de traitement comprenant un processeur, une seconde mémoire et un dispositif d'interface interfaçant le dispositif de traitement avec la première mémoire.

Ce procédé comprend les étapes suivantes mises en oeuvre au niveau du dispositif d'interface pour transférer des données depuis la première mémoire, dans laquelle les données sont stockées selon un premier format de données, vers la seconde mémoire, dans laquelle les données sont stockées selon un second format de données :

/a/ recevoir, depuis la première mémoire, un premier groupe de données ordonnées selon une séquence correspondant au premier format de données ;

/b/ obtenir au moins un second groupe de données en ordonnant lesdites données du premier groupe selon une nouvelle séquence qui est fonction des premier et second formats de données ; et

/c/ stocker le second groupe de données dans la seconde mémoire.

Grâce à ces dispositions, une conversion de format peut avantageusement être effectuée simultanément au transfert des données depuis la première mémoire, ou mémoire extérieure, vers la seconde mémoire, ou mémoire locale au processeur, ou encore mémoire interne.

Ainsi, une conversion de format peut être mis en place au sein d'un DMA. Par conséquent, la charge de travail du processeur peut être allégée. En outre, les noyaux du processeur peuvent avantageusement rester indépendant du format de stockage des données à traiter puisqu'il est aisé dans un mode de réalisation de la présente invention, d'adapter tout type de format de stockage dans la première mémoire à tout type de format de stockage dans la seconde mémoire. Ainsi, même si le premier format de données est modifié, seul le micrologiciel, ou encore en anglais 'firmware' peut être légèrement modifié mais le noyau de l'algorithme est indépendant et peut de ce fait ne pas être modifié.

Avantageusement le processeur peut ainsi se consacrer à d'autres tâches que celle qui consiste à gérer le format des données stockées dans sa mémoire locale, puisque selon un mode de réalisation de la présente invention, le format de stockage des données stockées dans sa mémoire locale sont déjà adaptée au traitement qui va leur être appliqué.

L'étape /b/ peut être réalisée en appliquant au premier groupe de données une fonction mathématique bijective de permutation circulaire qui est fonction des premier et second formats de données.

Dans une variante, à l'étape /b/, les données du premier groupe de données sont réparties respectivement au sein d'une pluralité de seconds groupes de données, selon une répartition qui est fonction des premier et second formats de données.

En procédant ainsi, on est avantageusement en mesure de stocker à des emplacements souhaités les données récupérées depuis la première mémoire.

Le déclenchement de l'étape /a/ peut être provoqué par une lecture du premier groupe de données dans la première mémoire.

Dans le cas où le premier format de données est adapté pour le stockage d'un premier et d'un second type de données d'une manière entrelacée dans la première mémoire et le second format de données est adapté pour stocker les premier et second types de données de manière désentralacée, l'étape /b/ peut comprendre les étapes suivantes :

- grouper les données du premier type en un premier sous-groupe et les données du second type en un second sous-groupe; et
- stocker le premier sous-groupe dans une première partie de la seconde mémoire et stocker le second sous-groupe dans une seconde partie de la seconde mémoire.

Ainsi, au cours du transfert, avantageusement le format de stockage des données peut être adapté à un traitement des données qui s'applique de manière séparée sur les différents types de données à traiter.

Après l'étape de stockage /c/, les étapes suivantes peuvent aussi être mises en oeuvre :

/d/ traiter les données stockées dans la seconde mémoire, puis stocker les données traitées dans la seconde mémoire selon le second format de données ;

/e/ au niveau du dispositif d'interface, recevoir, depuis la seconde mémoire, un groupe de données traitées ordonnées selon une séquence correspondant au second format de données ;

/f/ obtenir un autre groupe de données en ordonnant lesdites données traitées dudit groupe selon une nouvelle séquence qui est fonction des premier et second formats de données ; et

/g/ stocker ledit autre groupe de données dans la première mémoire.

De cette façon, de la place peut être libérée dans la seconde mémoire afin de pouvoir y stocker de nouvelles données qui n'ont pas encore été traitées. Le transfert des données entre les premières et seconde mémoires peut donc être avantageusement effectué soit dans le sens de la première vers la seconde mémoire pour les données qui doivent être traitées, soit dans l'autre, c'est-à-dire depuis la seconde mémoire vers la première mémoire pour les données qui ont déjà été traitées.

Les données ainsi stockées et transférées selon un mode de réalisation de la présente invention peuvent correspondre à des informations de luminance et à des informations de chrominance, relatives à des pixels d'une image vidéo.

Un second aspect de la présente invention propose un dispositif d'interface dans un dispositif de traitement de données comprenant en outre un processeur. Le dispositif d'interface est adapté pour transférer, depuis une première mémoire stockant des données selon un premier format de données, vers une seconde mémoire stockant des données selon un second format de données. Le dispositif d'interface comprenant :

- une unité de réception, adaptée pour recevoir, depuis la première mémoire, un premier groupe de données ordonnées selon une séquence correspondant au premier format de données ;
- une unité de gestion de format adaptée pour fournir au moins un second groupe de données en ordonnant lesdites données du premier groupe selon une nouvelle séquence qui est fonction des premier et second formats de données ;
- une unité de transfert adaptée pour stocker le second groupe de données dans la seconde mémoire.

L'unité de gestion de format peut appliquer une fonction mathématique bijective de permutation circulaire au premier groupe de données, ladite fonction mathématique étant fonction des premier et second formats de données.

L'unité de réception peut en outre être adaptée pour recevoir, depuis la seconde mémoire, un groupe de données traitées par le processeur et ordonnées selon une séquence correspondant au second format de données ; l'unité de gestion de format peut en outre être adaptée pour fournir un autre groupe de données en ordonnant les données traitées du groupe selon une nouvelle séquence qui est fonction des premier et second formats de données ; et l'unité de transfert est en outre adaptée pour stocker ledit autre groupe de données dans la première mémoire.

Un troisième aspect de la présente invention propose un système de traitement de données comprenant une première mémoire stockant des données selon un premier format de données ; et un dispositif de traitement de données incluant une seconde mémoire stockant des données selon un second format de données, un processeur adapté pour traiter des données stockées dans la seconde mémoire, et un dispositif d'interface. Le dispositif d'interface comprend :

- une unité de réception, adaptée pour recevoir, depuis la première mémoire, un premier groupe de données ordonnées selon une séquence correspondant au premier format de données ;
- une unité de gestion de format adaptée pour fournir au moins un second groupe de données en ordonnant lesdites données du premier groupe selon une nouvelle séquence qui est fonction des premier et second formats de données ;
- une unité de transfert adaptée pour stocker le second groupe de données dans la seconde mémoire.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre une architecture de mémoires dans laquelle on applique un mode de réalisation de la présente invention ;
- la figure 2-A illustre les principales étapes d'un procédé selon un mode de réalisation de la présente invention ;
- la figure 2-B illustre une fonction mise en oeuvre dans une unité d'interface, ou dispositif d'interface, selon un mode de réalisation de la présente invention ;
- les figures 3-5 illustrent un transfert de données selon un mode de réalisation de la présente invention dans un premier et un second cas.

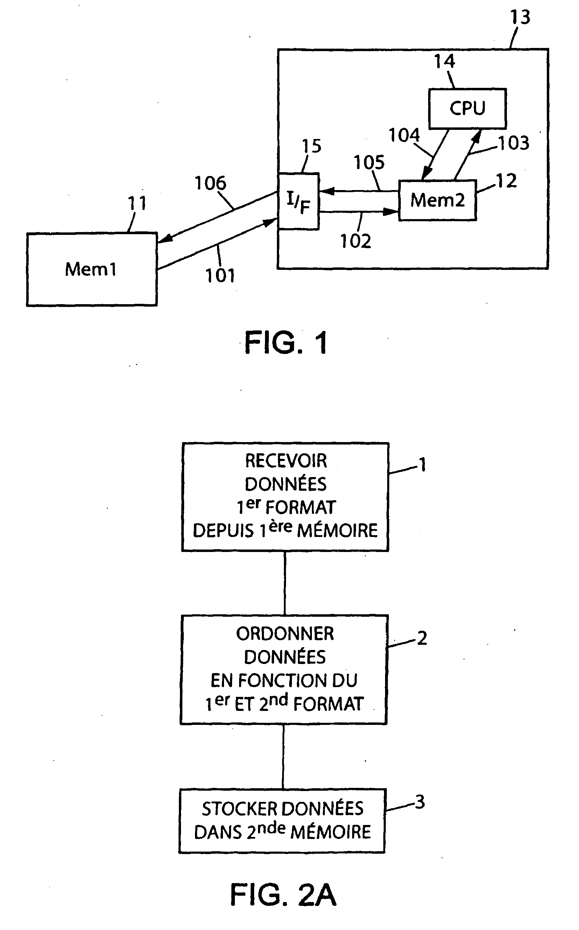

La figure 1 illustre un mode de réalisation de la présente invention dans une architecture comprenant une première mémoire 11 extérieure à une entité de traitement de données vidéo 13. Cette entité de traitement vidéo comprend un processeur, ou CPU pour 'Central Processing Unit' 14, et une seconde mémoire 12 locale qui est associée au processeur 14. Cette entité de traitement vidéo 13 comprend en outre une unité d'interface 15, ou dispositif d'interface, adaptée pour, d'une part, recevoir 101 depuis la mémoire extérieure 11 et transmettre 102 vers la seconde mémoire 12 des données vidéo, et pour, d'autre part, recevoir 105 depuis la seconde mémoire 12 et transmettre 106 à la première mémoire 11 des données vidéo selon un mode de réalisation de la présente invention.

En effet, un transfert 103 de données peut être effectué depuis la seconde mémoire 12 vers le processeur 14 qui a en charge le traitement des données vidéo stockées dans la mémoire locale 12. Ainsi, dans certains cas, par exemple lorsque le processeur applique des algorithmes complexes qui requièrent un traitement en plusieurs étapes ou encore lorsque la quantité des données vidéo est trop importante pour être traitée en une seule étape, le processeur 14, après avoir effectué une étape de traitement, transfère, à une étape 104, les données traitées dans la seconde mémoire 12. Ces données peuvent alors être transmises, à l'étape 106, à la première mémoire de sorte à libérer de l'espace mémoire dans la seconde mémoire 12 pour permettre au processeur de poursuivre le traitement des données vidéo.

Dans un mode de réalisation de la présente invention, cette unité d'interface effectue de manière symétrique les transferts de données depuis la première mémoire vers la seconde mémoire et les transferts de données depuis la seconde mémoire vers la première mémoire. Par conséquent, dans les sections suivantes, seul le transfert de données depuis la première mémoire vers la seconde mémoire est décrit, puisqu'il est aisé d'en déduire le transfert de données depuis la seconde mémoire vers la première mémoire.

La figure 2-A illustre les principales étapes d'un procédé selon un mode de réalisation de la présente invention. En une étape 1, des données sont reçues depuis une première mémoire. Ces données sont reçues par groupe de données, dans chacun desquels elles sont ordonnées selon une séquence correspondant au format de stockage de données dans la première mémoire 11.

Puis, en une étape 2, ces données sont réordonnées au sein du groupe de données. La nouvelle séquence selon laquelle elles sont agencées est déterminée en fonction, à la fois, du premier format de stockage dans la première mémoire et du second format qui correspond au format adapté pour le traitement des données mis en oeuvre par le processeur 14.

Enfin, en une étape 3, les données ainsi réordonnées sont alors stockées dans la seconde mémoire 12.

Lorsque les données à transmettre depuis la première mémoire vers la seconde mémoire sont plus nombreuses que celles contenues dans le groupe de données considéré, les étapes 1-3 peuvent être réitérées de sorte à transférer toutes les données qui sont stockées dans la première mémoire 11 et qui requièrent un traitement par le processeur 14.

Dans un mode de réalisation de la présente invention, ces étapes sont mises en oeuvre dans l'unité d'interface 15.

Afin de déclencher la réception du groupe de données à l'étape 1, l'unité d'interface 15 peut donner un ordre de lecture de la première mémoire 11 en précisant une adresse de mémoire correspondant aux premières données à lire dans ladite mémoire ainsi qu'une taille du groupe de données à lire, ou encore groupe de lecture.

L'unité d'interface 15 connaît le format de stockage des données dans la première mémoire et le format de stockage souhaité dans la seconde mémoire pour un traitement efficace des données au niveau du processeur et se base sur ces deux formats pour déterminer une fonction à appliquer au groupe de données reçues depuis la première mémoire 11 avant de stocker ces données dans la seconde mémoire 12. Une telle fonction permet d'obtenir à partir de la séquence selon laquelle les données sont ordonnées dans un premier groupe une séquence selon laquelle les données sont ordonnées dans un second groupe.

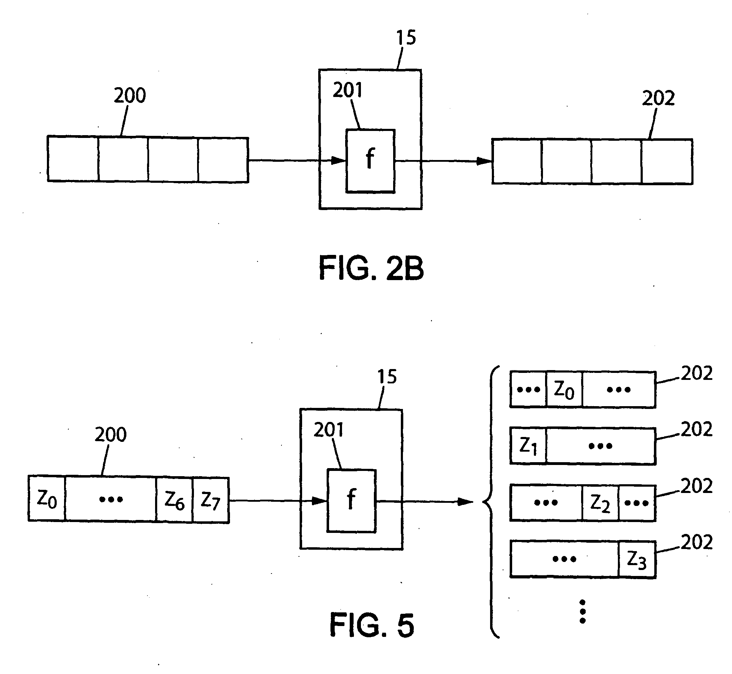

La figure 2-B illustre une telle fonction mise en oeuvre dans l'unité d'interface 15 selon un mode de réalisation de la présente invention. Un groupe de lecture 200, c'est-à-dire un premier groupe de données récupéré dans la première mémoire 11, est reçu par l'unité d'interface 15. Dans ce premier groupe 200 les données sont ordonnées selon une séquence qui correspond au premier format. Puis, ce groupe de données est traité par l'unité d'interface 15 qui applique une fonction mathématique f de sorte à fournir un second groupe de données 202 qui comprend les données du premier groupe de données 200, ordonnées selon une séquence qui correspond au format de stockage souhaité dans la seconde mémoire 12. Cette fonction mathématique f est déterminée en fonction du premier et du second format.

Les sections suivantes détaillent un mode de réalisation de la présente invention dans des cas de transfert de données différent. Dans un premier cas, des données stockées dans la première mémoire dans un seul espace mémoire commun sont transférées dans deux espaces mémoires distincts de la seconde mémoire 12. Dans un second cas, des données stockées dans la première mémoire dans un seul espace mémoire commun sont transférées dans un seul espace mémoire commun de la seconde mémoire, mais avec un format de stockage différent.

A partir de ces différents cas détaillés ci-dessous, il est aisé d'en déduire des variantes de transfert de données qui s'adaptent à tout type de format de stockage dans la première et la seconde mémoire.

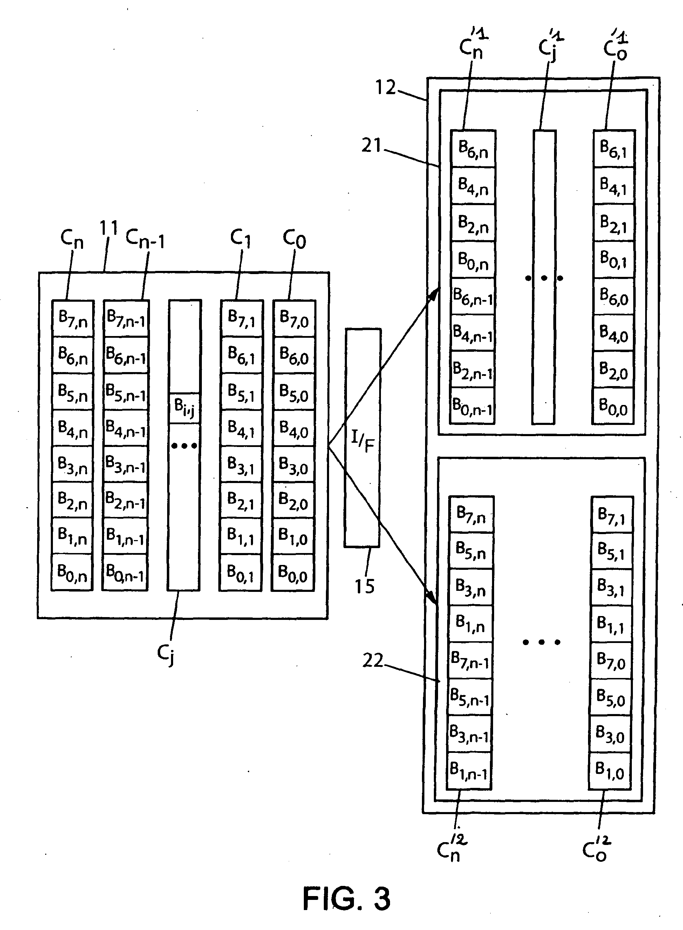

La figure 3 illustre un mode de réalisation de la présente invention correspondant au premier cas de transfert de données. A titre d'exemple, chaque donnée à manipuler a une taille de 1 octet et est illustrée sous la forme d'un carré $B_{i,j}$. Les données stockées dans la mémoire 11 sont groupées en cellule de stockage, chaque cellule $C_j$, pour j compris entre 0 et n, comprenant un nombre K de données. Le nombre K peut être égal à 8.

Les données stockées dans la mémoire 12 sont également groupées en cellules $C'^1_j$ et $C'^2_j$, respectivement dans une première et une seconde mémoire tampon, pour j compris entre 0 et n. Ces cellules de stockage de la seconde mémoire 12 peuvent être de taille identique aux cellules de stockage de la première mémoire 11.

Dans cet exemple, le processeur 14 met en oeuvre un algorithme de traitement de données qui requiert un traitement de données distinct entre deux types de données, par exemple, les données de chrominance et les données de luminance alors que, dans la première mémoire 11, ces deux types de données sont stockées alternativement et successivement dans l'ordre des pixels échantillonnés de l'image considérée de sorte que ces données sont entrelacées. Ainsi, dans un mode de réalisation de la présente invention, l'unité d'interface 15, au cours du transfert des données depuis la première mémoire 11 vers la seconde mémoire 12, met en forme les données de sorte à adapter le format de stockage des données, dans la mémoire locale du processeur, au traitement à mettre en oeuvre par le processeur 14 sur ces données.

Les données à récupérer dans la première mémoire sont stockées dans un espace mémoire commun de la première mémoire 11. Puis, ces données sont avantageusement réparties dans deux espaces mémoires distincts, ou mémoires tampon 21 et 22, de la seconde mémoire 12. Ainsi, par exemple, la mémoire tampon 21 peut contenir les données relatives à la luminance et la mémoire tampon 22 peut contenir les données relatives à la chrominance.

Dans ce contexte, les données de chrominance et de luminance peuvent être stockées alternativement pour les pixels successifs des images vidéo considérées, et plus précisément par exemple les données de luminance peuvent correspondre aux données $B_{i,j}$ où i est un nombre pair, et les données de chrominance peuvent correspondre aux données $B_{i,j}$ où i est un nombre impair dans la première mémoire.

Ainsi, pour fournir un format des données pertinent au processeur, l'unité d'interface 15 peut avantageusement récupérer dans la première mémoire toutes les données $B_{i,j}$ où i est un nombre pair et stocker ces données dans le premier tampon 21 et récupérer les données $B_{i,j}$ où i est un nombre impair et stocker ces données dans le second tampon 22.

Dans un mode de réalisation de la présente invention, l'unité d'interface 15 est un dispositif du type DMA. La lecture des données dans la mémoire 15 peut alors être contrôlée par les paramètres suivants :

- une adresse de démarrage de lecture dans la première mémoire 11 qui définit le premier octet à transférer depuis la mémoire 11 vers la mémoire 12 ;
- une taille de données à transférer qui définit le nombre N d'octets à transférer ;
- une adresse de démarrage de stockage dans le premier tampon 21 de la seconde mémoire 12 ; et
- une adresse de démarrage de stockage dans le second tampon 22 de la seconde mémoire 12.

Dans cet exemple, les données sont récupérées, depuis la mémoire 11, par groupe de lecture 200, chaque groupe comprenant N données. Le nombre N peut être égal à 8. Les groupes de lecture correspondent donc ici aux cellules de stockage telles que définies ci-avant.

Puis, les données sont écrites dans la seconde mémoire 12 par groupe d'écriture 202, chaque groupe comprenant un nombre M de données. Le nombre M peut être égal au nombre N.

Aucune limitation n'est attachée au nombre de données dans un groupe de lecture ou d'écriture. Ces groupes de lecture et d'écriture peuvent également comprendre des nombres différents de données. Dans l'exemple considéré dans les sections suivantes, les nombres K, N et M sont égaux à 8.

Chaque fois qu'un groupe de lecture de 8 données de 1 octet chacune est transféré depuis la première mémoire 11, l'unité d'interface 15 distribue les données $B_{i,j}$ avec i nombre pair dans le premier tampon 21 et les données $B_{i,j}$ avec i nombre impair dans le second tampon 22 afin de composer des groupes d'écriture respectifs pour les premier et second tampons. Chaque fois qu'un groupe d'écriture 202 est plein, c'est-à-dire dans cet exemple, chaque fois qu'un groupe d'écriture contient 8 données destinées à être stockées dans un des deux tampons, alors ledit groupe de données est écrit dans la mémoire tampon correspondante de la seconde mémoire 12.

De manière plus générale, selon un mode de réalisation de la présente invention, l'unité d'interface 15 récupère les données stockées dans la première mémoire et leur applique la fonction mathématique f qui est basée à la fois sur le premier format de stockage des données dans la première mémoire et le second format de stockage des données dans la seconde mémoire, ce dernier pouvant être lui-même avantageusement défini en fonction de caractéristiques du traitement de données à appliquer à ces données par le processeur 14.

Ainsi, les cellules $C_j$ et $C_{j+1}$ de la première mémoire 11, pour j un entier pair, sont distribuées dans une première cellule de la première mémoire tampon 21 et dans une seconde cellule de la seconde mémoire tampon 22. Plus précisément, les cellules de stockage suivantes de la première mémoire 11 :

$$C_j = B_{0,j} ; B_{1,j} \ldots B_{7,j}$$

et

$$C_{j+1} = B_{0,j+1} ; B_{1,j+1} \ldots B_{7,j+1}$$

sont stockées dans une cellule $C'^1_j$ dans la première mémoire tampon 21 et dans une cellule $C'^2_j$ dans la seconde mémoire tampon 22, de sorte à séparer les données de luminance et les données de chrominance. Ces cellules vérifient :

$$C'^1_j = B_{0,j}, B_{2,j}, B_{4,j}, B_{6,j}, B_{0,j+1}, B_{2,j+1}, B_{4,j+1}, B_{6,j+1}$$

$$C'^2_j = B_{1,j}, B_{3,j}, B_{5,j}, B_{7,j}, B_{1,j+1}, B_{3,j+1}, B5_{,j+1}, B7_{,j+1}$$

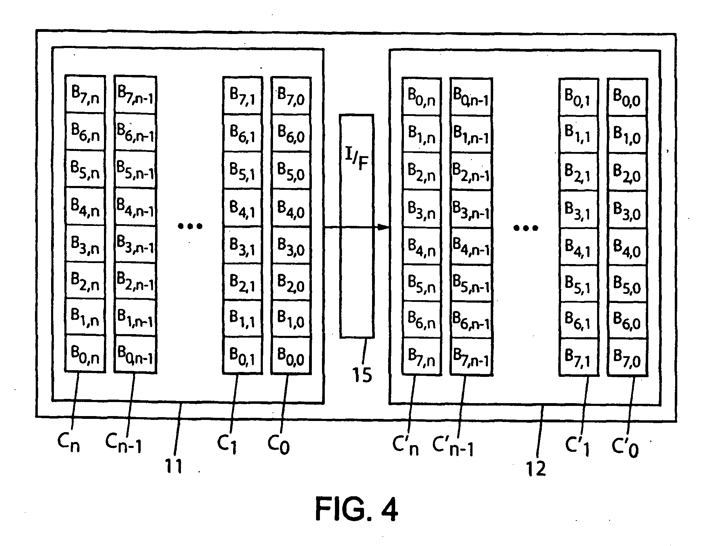

La figure 4 illustre un mode de réalisation de la présente invention correspondant au second cas de transfert. Dans ce contexte, les données stockées selon un premier format dans un espace mémoire commun de la première mémoire 11, sont stockées selon un second format, mais toujours dans un espace mémoire commun de la seconde mémoire 12.

Une application avantageuse de ce type de transfert de données selon un mode de réalisation de la présente invention correspond à une correction de l'ordre dans lequel les octets sont arrangés en mémoire, ou encore en anglais 'endianess'. Dans l'exemple ci-dessous, une telle correction prend place dans le cas où le nombre N de données compris dans un groupe de lecture 200 est différent du nombre K de données compris dans une cellule de stockage de la première mémoire 11. Plus précisément, cette correction d'ordre de stockage permet de passer d'un arrangement d'octets selon lequel l'octet de poids faible est stocké en premier dans la première mémoire 11, à un arrangement d'octets selon lequel l'octet de poids fort est stocké en premier.

Une telle application est décrite à titre d'exemple avec un nombre K égal à 8 et un nombre N vérifiant l'équation suivante :

$$N = (n+1)^*8 - 2 \qquad\qquad (1)$$

où $n+1$ correspond au nombre de cellule de stockage dans la première mémoire 11 à transférer.

Un objectif d'un tel mode de réalisation est donc d'inverser l'ordre de stockage des données $B_{i,j}$ au sein de chaque cellule de stockage $C_j$, entre les cellules de stockage de la première mémoire 11 et les cellules de stockage de la seconde mémoire 12.

Dans un mode de réalisation de la présente invention, l'unité d'interface 15 est un dispositif du type DMA. La lecture des données dans la mémoire 15 peut alors être contrôlée par les paramètres suivants :

- une adresse de démarrage de lecture dans la première mémoire 11 qui définit le premier octet à transférer depuis la mémoire 11 vers la mémoire 12 ;
- une taille de données à transférer qui définit le nombre d'octets N à transférer, c'est-à-dire la taille d'un groupe de lecture 200 ; et
- une adresse de démarrage de stockage dans la seconde mémoire 12.

La fonction mathématique f peut alors s'écrire sous la forme suivante :

$$f(B_{0,j}; B_{1,j}; B_{2,j}; B_{3,j}; B_{4,j}; B_{5,j}; B_{6,j}; B_{7,j}) = B_{7,j}; B_{6,j}; B_{5,j}; B_{4,j}; B_{3,j}; B_{2,j}; B_{1,j}; B_{0,j}$$

pour toutes les cellules de stockage telles que définies précédemment.

Dans l'exemple considéré, la dernière donnée à être transférée dans le groupe de lecture 200 est la donnée $B_{5,n}$. Il en résulte que les champs de la cellule $C_n'$ devant correspondre aux données $B_{6,n}$ et $B_{7,n}$, ne sont pas renseignés.

La présente invention couvre tout type de fonction f qui est adaptée pour transformer le premier groupe de données arrangé selon une première séquence en un ou plusieurs groupes de données arrangées selon une ou plusieurs séquences respectives.

La fonction f présente les caractéristiques requises pour agencer dans la seconde mémoire, selon un ordre déterminé en fonction de caractéristiques de l'algorithme à appliquer, les données récupérées dans la première mémoire.

De sorte à écrire à des emplacements déterminés et non successifs de la seconde mémoire, les données récupérées de manière successive dans la première mémoire, la fonction f est basée sur le mode d'écriture dans la seconde mémoire. Dans le cas décrit, des données sont écrites dans la seconde mémoire par groupe de 8 octets.

Ainsi, par exemple, à partir d'un premier groupe de données de 8 octets, $Z_0$ à $Z_7$, la fonction f peut être adaptée pour générer une pluralité de groupe de données de 8 octets. Dans cette pluralité de groupes de données, seule une partie des octets d'un même groupe de données correspond à un des octets du premier groupe de données $Z_0$ à $Z_7$. En procédant ainsi, on est en mesure d'écrire à des emplacements de la seconde mémoire qui n'ont pas des adresses successives.

La figure 5 illustre un tel mode de réalisation. Ainsi, le premier groupe de données 200 comprend 8 octets $Z_0$-$Z_7$. La fonction f stocke ces octets dans la seconde mémoire sous la forme de seconds groupes de données 202, chacun comprenant un des octets du premier groupe de données 200. Puis, chacun de cette de pluralité de seconds groupes de données 202 peut être écrit successivement dans la seconde mémoire.

En procédant ainsi, la fonction f permet d'écrire en des emplacements déterminés dans la seconde mémoire adaptés pour le traitement des données par le processeur.

Les autres octets des seconds groupes de données 202 peuvent être d'une valeur quelconque ou encore peuvent correspondre à une valeur d'octet qui indique de ne pas écrire dans la seconde mémoire, et de ce fait de conserver la valeur stockée dans la seconde mémoire avant l'écriture dudit second octet.

La présente invention a été décrite ci-dessus dans des modes de réalisation préférés mais non limitatifs. Par ailleurs, les termes "externe" et "interne" ou les expressions "de stockage" et "de traitement" ne limitent pas l'application des principes de l'invention à une architecture matérielle déterminée.

**Revendications**

1. Procédé de traitement de données stockées dans une première mémoire (11) par un dispositif de traitement (13) comprenant un processeur (14), une seconde mémoire (12) et un dispositif d'interface (15) interfaçant le dispositif de traitement avec la première mémoire (11) ;
   comprenant les étapes suivantes mises en oeuvre au niveau du dispositif d'interface pour transférer des données entre la première mémoire, dans laquelle les données sont stockées selon un premier format de données, et la seconde mémoire, dans laquelle les données sont stockées selon un second format de données :

   /a/ recevoir (1), depuis la première mémoire, un premier groupe de données (200) ordonnées selon une séquence correspondant au premier format de données ;
   /b/ obtenir au moins un second groupe de données (202) en ordonnant (2) lesdites données du premier groupe selon une nouvelle séquence qui est fonction des premier et second formats de données;
   /c/ stocker (2) le second groupe de données dans la seconde mémoire ;
   /d/ traiter les données stockées dans la seconde mémoire, puis stocker (104) les données traitées dans la seconde mémoire selon le second format de données ;
   /e/ au niveau du dispositif d'interface (15) recevoir (105), depuis la seconde mémoire (12), un groupe de données traitées ordonnées selon une séquence correspondant au second format de données ;
   /f/ obtenir un autre groupe de données en ordonnant lesdites données traitées dudit groupe selon une nouvelle séquence qui est fonction des premier et second formats de données ; et
   /g/ stocker (106) ledit autre groupe de données dans la première mémoire.

2. Procédé de traitement de données selon la revendication 1, dans lequel l'étape /b/ est réalisée en appliquant au premier groupe de données une fonction mathématique bijective de permutation circulaire qui est fonction des premier et second formats de données.

3. Procédé de traitement de données selon la revendication 1, dans lequel, à l'étape /b/, les données du premier groupe de données (200) sont réparties respectivement au sein d'une pluralité de seconds groupes de données (202), selon une répartition qui est fonction des premier et second formats de données.

4. Procédé de traitement de données selon l'une quelconque des revendications précédentes, dans lequel le déclenchement de l'étape /a/ est provoqué par une lecture du premier groupe de données dans la première mémoire.

5. Procédé de traitement de données selon la revendication 4, dans lequel, le premier format de données étant adapté pour le stockage d'un premier et d'un second type de données d'une manière entrelacée dans la première mémoire et le second format de données étant adapté pour stocker lesdits premier et second types de données de manière désentralacée, l'étape /b/ comprend les étapes suivantes :

   - grouper les données du premier type en un premier sous-groupe et les données du second type en un second sous-groupe; et
   - stocker le premier sous-groupe dans une première partie de la seconde mémoire et stocker le second sous-groupe dans une seconde partie de la seconde mémoire.

6. Procédé de traitement de données selon l'une quelconque des revendications précédentes, dans lequel les données correspondent à des informations de luminance et à des informations de chrominance, relatives à des pixels d'une image vidéo.

7. Dispositif d'interface (15) dans un dispositif de traitement de données (13) comprenant en outre un processeur (14) ; ledit dispositif d'interface étant adapté pour transférer des données, entre une première mémoire (11) stockant des données selon un premier format de données, et une seconde mémoire (12) stockant des données selon un second format de données;
ledit dispositif d'interface comprenant :

- une unité de réception, adaptée pour recevoir (1), depuis la première mémoire, un premier groupe de données (200) ordonnées selon une séquence correspondant au premier format de données, et adaptée pour recevoir (105), depuis la seconde mémoire (12), un groupe de données traitées par le processeur (14) et ordonnées selon une séquence correspondant au second format de données ;
- une unité de gestion de format adaptée pour fournir au moins un second groupe de données (202) en ordonnant (2) lesdites données du premier groupe selon une nouvelle séquence qui est fonction des premier et second formats de données ; et pour fournir un autre groupe de données en ordonnant les données traitées du groupe selon une nouvelle séquence qui est fonction des premier et second formats de données;
- une unité de transfert adaptée pour stocker le second groupe de données dans la seconde mémoire et pour stocker (106) ledit autre groupe de données dans la première mémoire (11).

8. Dispositif d'interface selon la revendication 7, dans lequel l'unité de gestion de format applique une fonction mathématique bijective de permutation circulaire au premier groupe de données, ladite fonction mathématique étant fonction des premier et second formats de données.

9. Système de traitement de données comprenant une première mémoire (11) stockant des données selon un premier format de données et un dispositif de traitement de données incluant une seconde mémoire (12) stockant des données selon un second format de données, un processeur (14) adapté pour traiter des données stockées dans la seconde mémoire (12), et un dispositif d'interface (15) selon la revendication 7 ou 8.

**Claims**

1. A method for processing data stored in a first memory (11) by a processing device (13) comprising a processor (14), a second memory (12) and an interface device (15) interfacing the processing device with the first memory (11), comprising the following steps, implemented in the interface device, for transferring data between the first memory, in which the data are stored in a first data format, and the second memory, in which the data are stored in a second data format:

/a/ receiving (1) from the first memory a first group of data (200), ordered into a sequence corresponding to the first data format,
/b/ obtaining at least one second group of data (202) by ordering (2) said data in the first group into a new sequence which is a function of the first and second data formats,
/c/ storing (2) the second group of data in the second memory,
/d/ processing the data stored in the second memory, then storing (104) the processed data in the second memory using the second data format,
/e/ at the interface device level (15), receiving (105) from the second memory (12) a group of processed data ordered into a sequence corresponding to the second data format,
/f/ obtaining another group of data by ordering said processed data from said group into a new sequence which is a function of the first and second data formats, and
/g/ storing (106) said other group of data in the first memory.

2. A method for processing data according to claim 1, wherein the step /b/is achieved by applying to the first group of data a mathematical bijective circular shift function which is a function of the first and second data formats.

3. A method for processing data according to claim 1, wherein, in step /b/, the data of the first group of data (200) are respectively distributed into multiple second groups of data (202) according to a distribution which is a function of the first and second data formats.

4. A method for processing data according to any of the above claims, wherein step /a/ is triggered by a read of the first group of data from the first memory.

5. A method for processing data according to claim 4, wherein, the first data format being suitable for storing a first and a second type of data in an interlaced manner in the first memory, and the second data format being suitable for storing said first and second types of data in a deinterlaced manner, step /b/ comprises the following steps:

   - grouping the data of the first type into a first subgroup and the data of the second type into a second subgroup, and
   - storing the first subgroup in a first part of the second memory and storing the second subgroup in a second part of the second memory.

6. A method for processing data according to any of the preceding claims, wherein the data correspond to luminance information and chrominance information concerning the pixels of a video image.

7. An interface device (15) in a data processing device (13) which additionally comprises a processor (14), said interface device being suitable for transferring between a first memory (11) which stores data in a first data format, and a second memory (12) which stores data in a second data format, said interface device comprising:

   - a receiving unit adapted for receiving (1) from the first memory a first group of data (200) ordered into a sequence corresponding to the first data format, and able to receive (105) from the second memory (12) a group of data processed by the processor (14) and ordered into a sequence corresponding to the second data format,
   - a format management unit adapted for providing at least one second group of data (202) by ordering (2) said data of the first group into a new sequence which is a function of the first and second data formats, and able to provide another group of data by ordering the processed data of the group into a new sequence which is a function of the first and second data formats,
   - a transfer unit adapted for storing the second group of data in the second memory and for storing (106) said other group of data in the first memory (11).

8. An interface device according to claim 7, wherein the format management unit applies a mathematically bijective circular shift function to the first group of data, said circular shift function being a function of the first and second data formats.

9. A data processing system comprising a first memory (11) which stores data in a first data format, and a data processing device including a second memory (12) which stores data in a second data format, a processor (14) able to process data stored in the second memory (12), and an interface device (15), according to claim 7 or 8.

**Patentansprüche**

1. Verfahren zur Verarbeitung von in einem ersten Speicher (11) gespeicherten Daten durch eine Verarbeitungsvorrichtung (13) mit einem Prozessor (14), einem zweiten Speicher (12) und einer Schnittstelleneinrichtung (15), die die Verarbeitungsvorrichtung mit dem ersten Speicher (11) koppelt; mit den nachfolgenden Schritten, die auf Seiten der Schnittstelleneinrichtung durchgeführt werden, um die Daten zwischen dem ersten Speicher, in dem die Daten gemäß einem ersten Datenformat gespeichert werden, und dem zweiten Speicher, in dem die Daten gemäß einem zweiten Datenformat gespeichert werden, zu übertragen:

   /a/ Empfangen (1) einer ersten Gruppe von Daten (200), die gemäß einer dem ersten Datenformat entsprechenden Sequenz angeordnet sind, von dem ersten Speicher;
   /b/ Erhalten zumindest einer zweiten Gruppe von Daten (202) durch Anordnen (2) der Daten der ersten Gruppe gemäß einer neuen Sequenz, die eine Funktion des ersten und des zweiten Datenformats ist;
   /c/ Speichern (2) der zweiten Gruppe von Daten in dem zweiten Speicher;
   /d/ Verarbeiten der in dem zweiten Speicher gespeicherten Daten, dann Speichern (104) der verarbeiteten Daten in dem zweiten Speicher gemäß dem zweiten Datenformat;

/e/ Empfangen (105) einer Gruppe von verarbeiteten Daten, die gemäß einer dem zweiten Datenformat entsprechenden Sequenz angeordnet sind, von dem zweiten Speicher (12) auf Seiten der Schnittstelleneinrichtung (15);

/f/ Erhalten einer weiteren Gruppe von Daten durch Anordnen der verarbeiteten Daten dieser Gruppe gemäß einer neuen Sequenz, die eine Funktion des ersten und des zweiten Datenformats ist; und

/g/ Speichern (106) der weiteren Gruppe von Daten in dem ersten Speicher.

2. Datenverarbeitungsverfahren gemäß Anspruch 1, bei dem der Schritt /b/ durch Anwendung einer bijektiven mathematischen Funktion einer zyklischen Permutation, die eine Funktion des ersten und des zweiten Datenformats ist, auf die erste Gruppe von Daten realisiert wird.

3. Datenverarbeitungsverfahren gemäß Anspruch 1, bei dem im Schritt /b/ die Daten der ersten Gruppe von Daten (200) gemäß einer Aufteilung, die eine Funktion des ersten und des zweiten Datenformats ist, jeweils in eine einer Vielzahl von zweiten Gruppen von Daten (202) aufgeteilt werden.

4. Datenverarbeitungsverfahren gemäß einem der vorangehenden Ansprüche, bei dem die Auslösung des Schritts /a/ durch ein Lesen der ersten Gruppe von Daten in dem ersten Speicher verursacht wird.

5. Datenverarbeitungsverfahren gemäß Anspruch 4, bei dem, wobei das ersten Datenformat für die Speicherung eines ersten und eines zweiten Datentyps auf eine verschachtelte Art und Weise in dem ersten Speicher angepasst ist und das zweite Datenformat zum Speichern des ersten und des zweiten Datentyps in einer unverschachtelten Art und Weise angepasst ist, der Schritt /b/ die nachfolgenden Schritte aufweist:

- Gruppieren der Daten des ersten Typs in einer ersten Untergruppe und der Daten des zweiten Typs in einer zweiten Untergruppe; und
- Speichern der ersten Untergruppe in einem ersten Teil des zweiten Speichers und Speichern der zweiten Untergruppe in einem zweiten Teil des zweiten Speichers.

6. Datenverarbeitungsverfahren gemäß einem der vorangehenden Ansprüche, bei dem die Daten Leuchtdichteinformationen und Farbartinformationen in Bezug auf Bildpunkte eines Videobildes entsprechen.

7. Schnittstelleneinrichtung (15) in einer Datenverarbeitungsvorrichtung (13), die zusätzlich einen Prozessor (14) aufweist;

wobei die Schnittstelleneinrichtung zum Übertragen von Daten zwischen einem die Daten gemäß einem ersten Datenformat speichernden ersten Speicher (11) und einem die Daten gemäß einem zweiten Datenformat speichernden zweiten Speicher (12) angepasst ist;

wobei die Schnittstelleneinrichtung aufweist:

- eine Empfangseinheit, die angepasst ist zum Empfangen (1) einer ersten Gruppe von Daten (200), die gemäß einer dem ersten Datenformat entsprechenden Sequenz angeordnet sind, von dem ersten Speicher, und die angepasst ist zum Empfangen (105) einer Gruppe von Daten, die durch den Prozessor (14) verarbeitet und gemäß einer dem zweiten Datenformat entsprechenden Sequenz angeordnet sind, von dem zweiten Speicher (12);
- eine Formatverwaltungseinheit, die angepasst ist zum Bereitstellen zumindest einer zweiten Gruppe von Daten (202) durch Anordnen (2) der Daten der ersten Gruppe gemäß einer neuen Sequenz, die eine Funktion des ersten und des zweiten Datenformats ist, sowie zum Bereitstellen einer weiteren Gruppe von Daten durch Anordnen der verarbeiteten Daten der Gruppe gemäß einer neuen Sequenz, die eine Funktion des ersten und des zweiten Datenformats ist;
- eine Übertragungseinheit, die angepasst ist zum Speichern der zweiten Gruppe von Daten in dem zweiten Speicher und zum Speichern (106) der weiteren Gruppe von Daten in dem ersten Speicher (11).

8. Schnittstelleneinrichtung gemäß Anspruch 7, bei der die Formatverwaltungseinheit eine bijektive mathematische Funktion einer zyklischen Permutation auf die erste Gruppe von Daten anwendet, wobei die mathematische Funktion eine Funktion des ersten und des zweiten Datenformats ist.

9. Datenverarbeitungssystem mit einem Daten gemäß einem ersten Datenformat speichernden ersten Speicher (11) und einer Datenverarbeitungsvorrichtung umfassend einen Daten gemäß einem zweiten Datenformat speichernden zweiten Speicher (12), einen Prozessor (14), der zum Verarbeiten der in dem zweiten Speicher (12) gespeicherten Daten angepasst ist, und eine Schnittstelleneinrichtung (15) gemäß Anspruch 7 oder 8.

FIG. 1

FIG. 2A

FIG. 2B

FIG. 5

EP 1 840 751 B1

FIG. 3

**FIG. 4**

**EP 1 840 751 B1**

## RÉFÉRENCES CITÉES DANS LA DESCRIPTION

**Documents brevets cités dans la description**

- EP 1355487 A